# EUROPEAN PATENT APPLICATION

(11) **EP 4 607 617 A1**
(43) Date of publication of application: **27.08.2025**
(21) Application number: 23880304.3
(22) Date of filing: 20.10.2023
(51) Int. Cl.: H01M 4/525, H01M 4/505, H01M 4/36, H01M 4/131, H01M 10/052, H01M 4/02

(54) **CATHODE ACTIVE MATERIAL FOR LITHIUM SECONDARY BATTERY, PREPARATION METHOD THEREFOR, AND LITHIUM SECONDARY BATTERY COMPRISING SAME**

(30) Priority: 21.10.2022 KR 20220136819
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: KIM, Ju Seong, Seoul 06194 (KR); YU, Byongyong, Incheon 22003 (KR); HONG, Ki Joo, Incheon 21986 (KR); PARK, Jong Il, Pohang-si, Gyeongsangbuk-do 37680 (KR); LEE, Jiho, Incheon 22008 (KR); JUNG, Yongjo, Incheon 22002 (KR); NAM, Sang Cheol, Seoul 02587 (KR)
(74) Representative: Pfenning, Meinig & Partner mbB
(86) International application number: PCT/KR2023/016411
(87) International publication number: WO 2024/085729

(57) **Abstract**

The present invention relates to a positive electrode active material for a lithium secondary battery, comprising a lithium transition metal oxide containing nickel (Ni), wherein the lithium transition metal oxide is in form of a single particle, has an average particle diameter (D50) ranging from 2 µm to 4 µm, and exhibits a maximum pole density value of 20 or less at the (001) plane as determined by Electron Back Scatter Diffraction (EBSD) analysis of a pole figure diagram.

## Description

### FIELD OF THE INVENTION

The present invention relates to a positive electrode active material for a lithium secondary battery, a method for manufacturing the same, and a lithium secondary battery including the same, and more specifically, to a positive electrode active material for a lithium secondary battery, in form of a single particle, a method for manufacturing the same, and a lithium secondary battery including the same.

### DESCRIPTION OF THE RELATED ART

Carbon neutrality to prevent the depletion of fossil fuels and global warming is becoming very important. To achieve this, the development of renewable energy and electric vehicles to replace internal combustion engine vehicles is essential. Lithium-ion secondary batteries are being used as energy storage devices to realize this, and various positive electrode active materials are being developed to implement secondary batteries with higher energy density and stability.

Among these, research on nickel-based layered structure positive electrode active materials (LiNiO₂) substituted with ions of cobalt, manganese, and aluminum is the most active. Generally, these positive electrode active materials have a secondary aggregate multi-particle form where primary particles are gathered. However, these aggregate multi-particles have a large specific surface area, leading to a high risk of gas generation due to side reactions with the electrolyte. When rolling lithium transition metal oxides to high electrode density to implement high-density electrodes, particle breakage occurs, causing cracks due to volume changes during charging and discharging, resulting in low structural stability. To address this, research on bimodal active materials using large-diameter multi-particle active materials and small-diameter multi-particle active materials has been conducted. However, small-diameter multi-particle active materials have a larger specific surface area than large-diameter multi-particle active materials, significantly affecting cell degradation.

To solve this, research and development of positive electrode active materials in the form of single particles are being conducted. However, to synthesize positive electrode active materials in the form of single particles, sintering must be done at higher temperatures than for multi-particle positive electrode active materials, which significantly deteriorates the electrochemical properties of lithium secondary batteries.

### SUMMARY OF THE INVENTION

One aspect of the present invention is to provide a small-diameter single-particle positive electrode active material that solves the problem of cell degradation due to cracks or gas generation in existing small-diameter multi-particle active materials and exhibits excellent electrochemical properties.

Another aspect of the present invention is to provide a method for manufacturing the small-diameter single-particle positive electrode active material having the aforementioned advantages.

Another aspect of the present invention is to provide a lithium secondary battery comprising the positive electrode active material.

An embodiment of the present invention provides a positive electrode active material for a lithium secondary battery, which is a lithium transition metal oxide including nickel (Ni), wherein the lithium transition metal oxide is in form of a single particle, has an average particle diameter D50 of 2 to 4 µm, and a maximum pole density value of 20 or less at the (001) plane in a pole figure diagram obtained through Electron Back Scatter Diffraction (EBSD) analysis.

The positive electrode active material may not exhibit preferential orientation along the (001) plane during EBSD image analysis.

The positive electrode active material may be derived from a positive electrode active material precursor having an average particle diameter D50 of 5 to 15 µm.

The lithium transition metal oxide may be represented by the following Chemical Formula 1.

[Chemical Formula 1] Liₐ(Ni_{b}Me_{1-b})O₂

In Chemical Formula 1, 0.8≤a≤1.2, 0.6≤b≤0.99, and Me is Co, Mn, Al, Zr, Nb, B, P, La, Mg, Ta, Ti, W, Mo, Si, Ga, Zn, Ag, Sn, Bi, Au, Y, Ge, V, Cr, Fe, or a combination thereof.

In this case, b may be 0.8≤b≤0.99.

The positive electrode active material may further comprise a coating layer positioned on the surface of the lithium transition metal oxide, and the coating layer may include Co, Al, Ti, W, B, F, P, Mg, Ni, Fe, Cr, V, Cu, Ca, Zn, Zr, Nb, Mo, Sr, Sb, Bi, Si, S, La, Ta, Ga, or a combination thereof.

Another embodiment of the present invention provides a method for manufacturing a positive electrode active material for a lithium secondary battery, comprising: forming a mixture comprising a positive electrode active material precursor containing nickel (Ni) and a lithium raw material; sintering the mixture to form a lithium transition metal oxide; and pulverizing the lithium transition metal oxide to form a lithium transition metal oxide in the form of a single particle, wherein the average particle diameter D50 of the positive electrode active material precursor is larger than the average particle diameter D50 of the positive electrode active material.

The pulverizing may be performed such that the (001) plane of the lithium transition metal oxide is pulverized.

The pulverizing may be performed at a rotational speed of 3,000 to 3,600 rpm.

The pulverizing may be performed at a pulverizing pressure of 1.4 bar or more.

The average particle diameter D50 of the positive electrode active material precursor may be 5 to 15 µm.

The average particle diameter D50 of the positive electrode active material may be 2 to 4 µm.

The sintering may be performed at a temperature of 830 to 870°C for 5 to 15 hours.

In forming the mixture, a doping raw material may be further mixed, and the doping raw material may be a compound including one or more of Zr, Nb, Al, B, P, La, Mg, Ta, Ti, W, Mo, Si, Ga, Zn, Ag, Sn, Bi, Au, Y, Ge, V, Cr, and Fe, or a combination thereof.

After forming the lithium transition metal oxide in the form of a single particle, the method may further comprise: mixing the lithium transition metal oxide in form of a single particle with a coating raw material; and performing heat treatment to form a coating layer, wherein the coating raw material may be a compound including one or more of Co, Al, Ti, W, B, F, P, Mg, Ni, Fe, Cr, V, Cu, Ca, Zn, Zr, Nb, Mo, Sr, Sb, Bi, Si, S, La, Ta, and Ga, or a combination thereof.

Another embodiment of the present invention provides a positive electrode comprising the positive electrode active material.

Another embodiment of the present invention provides a lithium secondary battery comprising the positive electrode.

The positive electrode active material according to an embodiment of the present invention is in form of a single particle, providing excellent structural stability that enables the implementation of high electrode density, and exhibits excellent lifespan and safety due to reduced side reactions with the electrolyte. Additionally, the (001) plane, which is an electrochemically inactive plane in the Ni-based layered structure, is reduced, resulting in excellent electrochemical characteristics such as capacity.

The method for manufacturing a positive electrode active material according to another embodiment of the present invention can reduce the (001) plane of the single-particle positive electrode active material using a top-down method utilizing medium or large particle diameter precursors. Furthermore, by using medium or large particle diameter precursors, the filling amount of the mixture before sintering can be increased, improving the productivity of the active material.

### BRIEF DESCRIPTION OF THE DRAWINGS

FIG. 1 illustrates the EBSD image and pole figure diagram of the positive electrode active material prepared according to Example 1 and Comparative Example 1.
FIG. 2 shows the scanning electron microscope (SEM) image of the positive electrode active material prepared according to Example 1 and Comparative Example 1.
FIG. 3 illustrates the capacity characteristic evaluation results of the lithium secondary battery prepared according to Example 1 and Comparative Example 1.
FIG. 4 shows the high-temperature lifespan characteristic results of the lithium secondary battery prepared according to Example 1 and Comparative Example 1.

### DETAILED DESCRIPTION OF THE EMBODIMENTS

Terms such as first, second, and third are used to describe various parts, components, regions, layers, and/or sections but are not limited thereto. These terms are used only to distinguish one part, component, region, layer, or section from another. Therefore, a first part, component, region, layer, or section described below may be referred to as a second part, component, region, layer, or section within the scope of the present invention.

**The** technical terms used herein are for the purpose of describing particular embodiments only and are not intended to limit the present invention. **The** singular forms used herein include plural forms as long as the phrases do not explicitly indicate otherwise. The meaning of "comprising/including/containing/having" as used in a specification is to specify a particular characteristic, region, integer, step, behavior, element, and/or component, and does not exclude the existence or addition any other characteristic, region, integer, step, behavior, element, and/or component.

When we say that a part is "on" or "above" another part, it may be directly on or above the other part, or it may entail another part in between. In contrast, when we say that something is "directly on" of something else, we don't interpose anything between them.

Unless otherwise defined, all terms used herein, including technical and scientific terms, have the same meaning as commonly understood by a person of ordinary skill in the technical field to which the present invention belongs. Commonly used dictionary-defined terms are further construed to have meanings consistent with the relevant technical literature and the present disclosure, and are not to be construed in an idealized or highly formal sense unless defined.

Also, unless otherwise noted, "%" refers to "wt%", where 1 ppm is 0.0001 wt%.

In this specification, the term "combinations thereof" described in Markush-type expressions refers to one or more mixtures or combinations selected from the group consisting of the components listed in the Markush-type expression, meaning it includes any one or more selected from the group consisting of the components.

Hereinafter, the embodiments of the present invention will be described in detail to enable those skilled in the art to easily implement the invention. However, the present invention may be embodied in many different forms and should not be construed as limited to the embodiments set forth herein.

### 1. Positive Electrode Active Material

An embodiment of the present invention provides a positive electrode active material for a lithium secondary battery, which is a lithium transition metal oxide comprising nickel (Ni). The lithium transition metal oxide is in the form of a single particle, has an average particle diameter D50 of 2 to 4 µm, and a maximum pole density value of 20 or less at the (001) plane in a pole figure diagram obtained through Electron Back Scatter Diffraction (EBSD) analysis.

The positive electrode active material for a lithium secondary battery according to one embodiment of the present invention is in form of a single particle.

More specifically, the positive electrode active material can be divided into unassembled primary particles or secondary particles in which multiple primary particles are assembled and aggregated, depending on whether the primary particles, which are unit particles, are assembled. In this context, the positive electrode active material according to the present invention is in form of unassembled primary particles, i.e., a single particle.

As the positive electrode active material is in form of a single particle, it addresses the issues associated with secondary particles, such as the increased risk of side reactions with the electrolyte due to a large specific surface area, which reduces battery safety. Additionally, when the lithium transition metal oxide is rolled at a high electrode density to implement a high-density electrode, microcracks may occur between the primary particles with repeated charge and discharge cycles, leading to reduced structural stability and deterioration of lifespan characteristics.

Furthermore, the single-particle positive electrode active material according to the present invention has an average particle diameter D50 of 2 to 4 µm.

In this specification, the average particle diameter D50 can be defined as the particle diameter corresponding to 50% of the cumulative volume in the particle size distribution curve. The average particle diameter D50 can be measured, for example, using a laser diffraction method. The laser diffraction method generally allows for the measurement of particle diameters ranging from the submicron region to several millimeters, and it can provide results with high reproducibility and resolution.

The particle size in this range is suitable as a small particle size active material, particularly when used as a small particle size active material mixed with large particle size active materials in the manufacture of bimodal positive electrode active materials for implementing high-density electrodes.

However, generally, single-particle positive electrode active materials undergo sintering at high temperatures compared to multi-particle positive electrode active materials, resulting in the preferential growth of the stable (001) plane, imparting a laterally elongated shape to the particle. Since the (001) plane is the pathway for lithium ion movement, if it grows preferentially, the moving distance of lithium ions becomes longer, potentially leading to the deterioration of the electrochemical properties of the battery, such as capacity, initial efficiency, and high-temperature lifespan characteristics.

To solve this problem, the positive electrode active material according to the present invention has inhibited growth of the (001) plane, resulting in a maximum pole density value of 20 or less at the (001) plane in a pole figure diagram obtained through EBSD analysis.

The maximum pole density value at the (001) plane in a pole figure diagram obtained through EBSD analysis serves as a measure of the growth degree of the (001) plane. By satisfying this range, the diffusion distance of lithium ions is reduced, minimizing the deterioration of the electrochemical properties of the battery. This inhibition of the growth of the (001) plane can be implemented through a top-down process using medium or large particle size active material precursors, as will be described later. A more detailed explanation will be given below.

In this specification, the maximum pole density value at the (001) plane in a pole figure diagram obtained through EBSD analysis refers to a measurement obtained using Hitachi's SU5000 as the FESEM image observation device and EDAX's Velocity Super as the EBSD data analysis device under conditions of an area of 20 x 50 µm with a step size of 50 nm.

The maximum pole density value may more specifically be 18 or 15 or less and 10 or more.

Meanwhile, the positive electrode active material according to one embodiment of the present invention may have an X-ray diffraction pattern measurement where the peak intensity ratio of the (003) plane to the (104) plane, I(003)/I(104), is 1.4 or less, and more specifically, 1.3 or less.

Generally, the peak intensity value refers to the height of the peak or the integrated area value obtained by integrating the area of the peak, and in this specification, the peak intensity value refers to the area of the peak.

This value also serves as a measure of the growth degree of the (001) plane. In the positive electrode active material according to one embodiment of the present invention, as the growth of the (001) plane is inhibited, the I(003) corresponding to the XRD peak value of the (001) plane becomes relatively smaller than I(104), allowing I(003)/I(104) to be sufficiently small at 1.4 or less.

Accordingly, the positive electrode active material according to the present invention may not exhibit preferential orientation along the (001) plane during EBSD image analysis.

The positive electrode active material may be derived from a positive electrode active material precursor having an average particle diameter D50 of 5 to 15 µm. In other words, the positive electrode active material according to the present invention may be a small particle size active material manufactured from medium or large particle size active material precursors using a top-down method, as will be described later.

Such lithium transition metal oxide can be represented by the following Chemical Formula 1.

[Chemical Formula 1] Liₐ(Ni_{b}Me_{1-b})O₂

In Chemical Formula 1, 0.8≤a≤1.2, 0.6≤b≤0.99, and Me is Co, Mn, Al, Zr, Nb, B, P, La, Mg, Ta, Ti, W, Mo, Si, Ga, Zn, Ag, Sn, Bi, Au, Y, Ge, V, Cr, Fe, or a combination thereof.

The "a" represents the molar ratio of lithium in the lithium transition metal oxide, which can be 0.8≤a≤1.2, 0.85≤a≤1.15, or 0.9≤a≤1.1.

The "b" represents the molar ratio of nickel to the total moles of transition metals in the lithium transition metal oxide, which can be 0.60≤b≤0.99, 0.70≤b≤0.99, 0.80≤b≤0.99, 0.85≤b≤0.99, 0.90≤b≤0.99, or 0.90≤b≤0.95. When the nickel content in the lithium transition metal oxide satisfies this range, it is possible to manufacture a positive electrode active material and a lithium secondary battery with high capacity characteristics.

Particularly, "b" may be 0.8≤b≤0.99. In other words, the positive electrode active material according to the present invention can implement high capacity as high-nickel, with a nickel content of 80 mol% or more based on the total moles of transition metals.

The positive electrode active material further comprises a coating layer positioned on the surface of the lithium transition metal oxide, and the coating layer may include Co, Al, Ti, W, B, F, P, Mg, Ni, Fe, Cr, V, Cu, Ca, Zn, Zr, Nb, Mo, Sr, Sb, Bi, Si, S, La, Ta, Ga, or a combination thereof. Through this coating layer, residual lithium present on the surface of the active material can be reduced, and the structural and chemical stability of the active material can be further enhanced.

Preferably, the coating layer may include Co and Al.

The thickness of the coating layer may be 1 nm to 100 nm.

### 2. Method for Manufacturing a Positive Electrode Active Material

Another embodiment of the present invention provides a method for manufacturing a positive electrode active material for a lithium secondary battery, comprising:
forming a mixture comprising a positive electrode active material precursor containing nickel (Ni) and a lithium raw material; sintering the mixture to form a lithium transition metal oxide; and pulverizing the lithium transition metal oxide to form a lithium transition metal oxide in the form of a single particle, wherein the average particle diameter D50 of the positive electrode active material precursor is larger than the average particle diameter D50 of the positive electrode active material.

Hereinafter, the method for manufacturing the positive electrode active material according to another embodiment of the present invention will be described in detail step by step.

First, a mixture comprising a positive electrode active material precursor containing nickel (Ni) and a lithium raw material is formed.

More specifically, the positive electrode active material precursor may be a hydroxide containing nickel and manganese. This positive electrode active material precursor can be represented by the following Chemical Formula 2.

[Chemical Formula 2] Niₓ₂Co_{y2}Mn_{z2}(OH)₂

In Chemical Formula 2,
0.6≤x2≤0.99, 0≤y2≤0.3, 0<z2≤0.3, and x2+y2+z2=1.

The x2 represents the molar ratio of nickel among the total metal elements in the transition metal hydroxide, which can be 0.6≤x2≤0.99, 0.7≤x2≤0.99, 0.80≤x2≤0.99, 0.85≤x2≤0.99, 0.90≤x2≤0.99, or 0.90≤x2≤0.95. If the nickel content in the transition metal hydroxide satisfies the above range, it is possible to manufacture a positive electrode active material and a lithium secondary battery with high capacity characteristics.

The y2 represents the molar ratio of cobalt among the total metal elements in the transition metal hydroxide, which can be 0≤y2≤0.3, 0.01≤y2≤0.2, 0.01≤y2≤0.1, 0.02≤y2≤0.08, or 0.02≤y2≤0.06.

The z2 represents the molar ratio of manganese among the total metal elements in the transition metal hydroxide, which can be 0<z2≤0.3, 0.01≤z2≤0.2, 0.01≤z2≤0.1, 0.02≤z2≤0.08, or 0.02≤z2≤0.06.

Particularly, the average particle diameter D50 of the positive electrode active material precursor may be 5 to 15µm.

More specifically, conventional methods for manufacturing single particle positive electrode active materials have used a bottom-up approach, where small particle size active material precursors are used to grow the particles to a desired size through a sintering process. However, this manufacturing method had the problem of decreasing the electrochemical properties of the secondary battery due to the preferential growth of the electrochemically stable (001) plane during the sintering process, which increases the particle size. Therefore, the present invention enables the manufacture of positive electrode active materials with reduced preferred orientation of the (001) plane compared to the conventional bottom-up method by performing sintering using a medium or large-sized precursor with an average particle diameter D50 of 5 to 15 µm, followed by a pulverizing process that randomly pulverizes the active material surfaces. Moreover, by using a medium or large-sized precursor, it is possible to increase the filling amount of the mixture before sintering, thereby improving the productivity of the active material.

The lithium raw material may include lithium-containing sulfates, nitrates, acetates, carbonates, oxalates, citrates, halides, hydroxides, or oxyhydroxides, and is not particularly limited as long as it can be dissolved in water. Specifically, the lithium raw material may be Li₂CO₃, LiNO₃, LiNO₂, LiOH, LiOH · H2O, LiH, LiF, LiCl, LiBr, Lil, CH₃COOLi, C₂H₃LiO₂, Li₂O, Li₂O₂, Li₂SO₄, Li₂SO₃, Li₃C₆H₅O₇, or a combination thereof, but is not limited thereto.

In the step of forming the mixture, a doping raw material can be further mixed. At this time, the doping raw material may be a compound including one or more of Zr, Nb, Al, B, P, La, Mg, Ta, Ti, W, Mo, Si, Ga, Zn, Ag, Sn, Bi, Au, Y, Ge, V, Cr, and Fe, or a combination thereof.

Next, the mixture is sintered to form a lithium transition metal oxide.

Through the sintering, a lithium transition metal oxide in which both single particles and agglomerated secondary particles of primary particles co-exist is formed.

The sintering can be performed at a temperature of 830 to 870°C. If the sintering temperature is too low, the primary particles may be too small, causing gas generation or degradation of lifespan. If the sintering temperature is too high, issues such as capacity and efficiency reduction due to overgrowth and cation mixing, where Ni ions occupy Li sites, can occur.

The sintering can be performed for 5 to 15 hours, more specifically for 8 to 12 hours or 9 to 11 hours. If the sintering time is too short, similar to the temperature, there may be issues such as reduced crystallinity and insufficient growth, causing gas generation or degradation of lifespan. If the sintering time is too long, issues such as capacity and efficiency reduction due to overgrowth and cation mixing can occur.

The sintering can be performed in an oxygen atmosphere. When sintering high-concentration nickel-rich positive electrode active materials at high temperatures for a long time, cation mixing occurs where Ni²⁺ occupies the lithium layer in the layered crystal structure during the sintering process. Therefore, it is preferable to synthesize the positive electrode active material in an oxygen atmosphere to prevent this.

The sintering can be divided into primary and secondary sintering as needed. Through secondary sintering, the recrystallization of the formed primary sintered material can form a lithium transition metal oxide with superior structural stability.

Next, the lithium transition metal oxide is pulverized to form a lithium transition metal oxide in the form of a single particle. At this time, the pulverizing can be performed such that the (001) plane of the lithium transition metal oxide is pulverized.

More specifically, through the pulverizing, the agglomeration of secondary particles, which are agglomerated primary particles, in the multi-particle form of the lithium transition metal oxide can be broken to form a lithium transition metal oxide composed solely of single particles.

Additionally, by performing pulverizing at an appropriate rotational speed and pulverizing pressure, a lithium transition metal oxide with a small particle size can be formed. Particularly, as pulverizing is performed at an appropriate rotational speed and pulverizing pressure, as described above, random pulverizing of the active material surface occurs, allowing for the formation of a positive electrode active material with a reduced (001) plane.

More specifically, the pulverizing can be performed at a rotational speed of 3,000 to 3,600 rpm. As the rotational speed satisfies the above range, it is possible to form a small particle size active material with an appropriate size and efficiently reduce the (001) plane of the active material.

Additionally, the pulverizing can be performed at a pulverizing pressure of 1.4 bar or more, more specifically at a pulverizing pressure of 1.4 bar or 1.5 bar or more, and 2 bar or 1.8 bar or less. As the pulverizing pressure satisfies the above range, it is possible to form a small particle size active material with an appropriate size and efficiently reduce the (001) plane of the active material.

The pulverizing method is not particularly limited and can be performed according to general pulverizing methods in the art. For example, a jet-mill process can be used.

Through this pulverizing process, a small particle positive electrode active material composed of single particles, with an average particle diameter D50 of 2 to 4 µm and suppressed growth of the (001) plane, can be obtained.

After the step of forming the lithium transition metal oxide in the form of a single particle, the method may further include mixing the lithium transition metal oxide composed of single particles with a coating raw material and performing heat treatment to form a coating layer.

At this time, the coating raw material may be a compound including one or more of Co, Al, Ti, W, B, F, P, Mg, Ni, Fe, Cr, V, Cu, Ca, Zn, Zr, Nb, Mo, Sr, Sb, Bi, Si, S, La, Ta, and Ga, or a combination thereof.

More specifically, the coating raw material may include Co₃O₄ and Al(OH)₃.

At this time, the content of the coating raw material may be 1 to 5 wt% based on the total weight of the lithium transition metal oxide, more specifically 1.5 to 3 wt%. If the content of the coating raw material is too low, there may be issues such as electrochemical capacity and lifespan degradation due to residual lithium present on the surface. If the content of the coating raw material is too high, the surface resistance increases, causing capacity and efficiency to decrease.

The heat treatment can be performed at a temperature of 550 to 800°C, more specifically at a temperature of 600 to 750°C or 650 to 700°C.

The heat treatment can be performed for 2 to 10 hours, more specifically for 3 to 7 hours or 4 to 6 hours.

As the heat treatment temperature and heat treatment time satisfy the above range, residual lithium can be suppressed, and uniform surface coating can be achieved.

### 3. Positive Electrode

Another embodiment of the present invention provides a positive electrode comprising the aforementioned positive electrode active material.

The positive electrode may include a positive electrode current collector and a positive electrode active material layer disposed on the positive electrode current collector, wherein the positive electrode active material layer may include the aforementioned positive electrode active material.

The positive electrode current collector is not particularly limited as long as it possesses conductivity without causing chemical changes in the battery. For example, stainless steel, aluminum, nickel, titanium, sintered carbon, or surfaces of aluminum or stainless steel treated with carbon, nickel, titanium, silver, etc., can be used. Additionally, the positive electrode current collector may generally have a thickness of 3 to 500 µm, and fine irregularities may be formed on the surface of the positive electrode current collector to enhance the adhesion of the positive electrode active material. It can be used in various forms such as films, sheets, foils, nets, porous bodies, foams, or non-woven fabrics.

The positive electrode active material layer may optionally include a binder and/or a conductive material along with the aforementioned positive electrode active material.

The binder serves to enhance the adhesion between the positive electrode active material particles and between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluoro-rubber, or various copolymers thereof. One or more of these may be used alone or in combination, but are not limited thereto. The binder may be included in an amount of 1 to 30% by weight relative to the total weight of the positive electrode active material layer.

The conductive material is used to impart conductivity to the electrode and can be used without particular limitation as long as it possesses electronic conductivity without causing chemical changes in the constructed battery. Specific examples include graphite such as natural graphite or artificial graphite; carbon-based materials such as carbon black, acetylene black, ketjen black, channel black, furnace black, lamp black, thermal black, carbon fibers; metal powders or metal fibers such as copper, nickel, aluminum, silver; conductive whiskers such as zinc oxide, potassium titanate; conductive metal oxides such as titanium oxide; or conductive polymers such as polyphenylene derivatives. One or more of these may be used alone or in combination, but are not limited thereto. The conductive material may be included in an amount of 1 to 30% by weight relative to the total weight of the positive electrode active material layer.

The positive electrode can be manufactured according to conventional positive electrode manufacturing methods.

Specifically, the positive electrode can be manufactured by applying a composition for forming a positive electrode active material layer containing the positive electrode active material and optionally a binder, conductive material, or solvent onto the positive electrode current collector, followed by drying and rolling. At this time, the types and amounts of the positive electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, and one or more of these may be used alone or in combination. The amount of the solvent used should be sufficient to dissolve or disperse the positive electrode active material, conductive material, and binder, considering the coating thickness of the slurry and manufacturing yield, and should have a viscosity that can exhibit excellent thickness uniformity during coating for electrode manufacture.

Additionally, alternatively, the positive electrode may be manufactured by casting the composition for forming a positive electrode active material layer onto a separate support, then laminating the film obtained by peeling it from the support onto the positive electrode current collector.

### 4. Lithium Secondary Battery

Another embodiment of the present invention provides a lithium secondary battery comprising the aforementioned positive electrode.

In particular, the lithium secondary battery according to the present invention may have an initial charge capacity of 228 mAh/g or 229 mAh/g or more, an initial discharge capacity of 205 mAh/g or 206 mAh/g or more, and an initial efficiency of 90% or more.

Additionally, the lithium secondary battery according to the present invention may have a high-temperature cycle retention rate of 91.3% or more and a high-temperature resistance increase rate of 169% or less.

Specifically, the lithium secondary battery may include: the aforementioned positive electrode; a negative electrode positioned opposite the positive electrode; a separator interposed between the positive and negative electrodes; and an electrolyte.

Additionally, the lithium secondary battery may optionally further include a battery container housing the electrode assembly of the positive electrode, negative electrode, and separator, and a sealing member sealing the battery container.

The negative electrode may include a negative electrode current collector and a negative electrode active material layer positioned on the negative electrode current collector.

The negative electrode current collector is not particularly limited as long as it has high conductivity without causing chemical changes in the battery. Examples include copper, stainless steel, aluminum, nickel, titanium, sintered carbon, carbon, nickel, titanium, or silver surface-treated copper or stainless steel, and aluminum-cadmium alloy. Additionally, the negative electrode current collector may typically have a thickness of 3 to 500 µm, and like the positive electrode current collector, it may have fine irregularities on its surface to enhance the bonding strength of the negative electrode active material. For example, it may be used in various forms such as films, sheets, foils, nets, porous structures, foams, and non-woven fabrics.

The negative electrode active material layer may optionally include a binder and a conductive material along with the negative electrode active material. For instance, the negative electrode active material layer may be manufactured by applying and drying a composition for forming a negative electrode active material layer containing the negative electrode active material and optionally a binder and a conductive material on the negative electrode current collector, or by laminating a film obtained by casting a composition for forming the negative electrode on a separate support and then peeling it off from the support onto the negative electrode current collector.

The negative electrode active material may be a compound capable of reversible intercalation and deintercalation of lithium. Specific examples include carbon-based materials such as artificial graphite, natural graphite, graphitized carbon fibers, and amorphous carbon; metal compounds capable of alloying with lithium such as Si, Al, Sn, Pb, Zn, Bi, In, Mg, Ga, Cd, Si alloys, Sn alloys, or Al alloys; metal oxides capable of doping and dedoping lithium such as SiO_{β} (0 < β < 2), SnO₂, vanadium oxide, and lithium vanadium oxide; or composites including metal compounds and carbon-based materials such as Si-C composites or Sn-C composites, and mixtures of one or more of these. Additionally, a thin film of metallic lithium may be used as the negative electrode active material. Moreover, both low-crystalline carbon and high-crystalline carbon materials can be used. Representative low-crystalline carbon materials include soft carbon and hard carbon, while representative high-crystalline carbon materials include amorphous, plate, flake, spherical, or fibrous natural graphite or artificial graphite, Kish graphite, pyrolytic carbon, mesophase pitch-based carbon fibers, mesocarbon microbeads, mesophase pitches, and petroleum or coal tar pitch derived cokes.

The binder and conductive material may be the same as those described for the positive electrode.

The separator separates the negative and positive electrodes and provides a passage for lithium ions. It can be used without particular limitation as long as it is typically used as a separator in lithium secondary batteries, and it is preferable that it has low resistance to ion movement and excellent electrolyte wettability. Specifically, it may be a porous polymer film, for example, a porous polymer film made of a polyolefin-based polymer such as an ethylene homopolymer, propylene homopolymer, ethylene/butene copolymer, ethylene/hexene copolymer, or ethylene/methacrylate copolymer, or a laminated structure of two or more layers thereof. Additionally, conventional porous non-woven fabrics, for example, non-woven fabrics made of high melting point glass fibers or polyethylene terephthalate fibers, can also be used. Moreover, a coated separator containing ceramic components or polymer materials may be used to ensure heat resistance or mechanical strength, and it may be used in a single-layer or multi-layer structure as needed.

The electrolyte may include organic liquid electrolytes, inorganic liquid electrolytes, solid polymer electrolytes, gel polymer electrolytes, solid inorganic electrolytes, molten inorganic electrolytes, etc., which can be used in the manufacture of lithium secondary batteries, but is not limited thereto.

Specifically, the organic liquid electrolyte may include an organic solvent and a lithium salt.

The organic solvent may be used without particular limitation as long as it can act as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon solvent such as benzene or fluorobenzene; a carbonate-based solvent such as dimethylcarbonate (DMC), diethylcarbonate (DEC), methylethylcarbonate (MEC), ethylmethylcarbonate (EMC), ethylene carbonate (EC), or propylene carbonate (PC); an alcohol-based solvent such as ethanol or isopropyl alcohol; nitriles such as R-CN (where R is a linear, branched, or cyclic hydrocarbon group of C2 to C20, which may include a double-bonded aromatic cyclic group or ether bond); amides such as dimethylformamide; dioxolanes such as 1,3-dioxolane; or sulfolanes such as sulfolane. Among these, carbonate-based solvents are preferred, and a mixture of cyclic carbonates with high ion conductivity and high dielectric constant (e.g., ethylene carbonate or propylene carbonate) and lowviscosity linear carbonate compounds (e.g., ethylmethylcarbonate, dimethylcarbonate, or diethylcarbonate) is more preferable. In this case, mixing cyclic carbonates and chain carbonates in a volume ratio of about 1:1 to about 1:9 can result in excellent electrolyte performance.

The lithium salt can be used without particular limitation as long as it is a compound capable of providing lithium ions used in lithium secondary batteries. Specifically, the lithium salt may be LiPF₆, LiClO₄, LiAsF₆, LiBF₄, LiSbF₆, LiAl0₄, LiAICl₄, LiCF₃SO₃, LiC₄F₉SO₃, LiN(C₂F₅SO₃)₂, LiN(C₂F₅SO₂)₂, LiN(CF₃SO₂)₂. LiCl, Lil, or LiB(C₂O₄)₂. The concentration of the lithium salt is preferably used within a range of 0.1 to 2.0M. When the concentration of the lithium salt is within this range, the electrolyte can exhibit excellent electrolyte performance due to having appropriate conductivity and viscosity, allowing lithium ions to move effectively.

In addition to the electrolyte components, the electrolyte may further include at least one additive for the purpose of improving the life characteristics of the battery, suppressing the decrease in battery capacity, enhancing the discharge capacity of the battery, etc. Examples of such additives include haloalkylene carbonate compounds such as difluoroethylene carbonate, pyridine, triethyl phosphate, triethanolamine, cyclic ethers, ethylenediamine, n-glyme, hexamethylphosphoric triamide, nitrobenzene derivatives, sulfur, quinone imine dyes, N-substituted oxazolidinone, N,N-substituted imidazolidin, ethylene glycol dialkyl ether, ammonium salts, pyrrole, 2-methoxyethanol, or aluminum trichloride. In this case, the additive may be included in an amount of 0.1 to 5% by weight based on the total weight of the electrolyte.

Hereinafter, embodiments of the present invention will be described in more detail through examples. However, the following examples are merely preferred embodiments of the present invention, and the present invention is not limited to these examples.

### Example 1: Top-down Method for Manufacturing Positive Electrode Active Material

### (1) Manufacturing of Positive Electrode Active Material

275g of an active material precursor with a composition of (Ni_{0.88}CO_{0.04}Mn_{0.08})(OH)₂ having an average particle diameter D50 of 15 µm, 125g of LiOH·H₂O, and 0.729g of ZrO₂ were introduced into a mixer and mechanically mixed to form a mixture.

Subsequently, the mixture was sintered at 850°C for 10 hours in an O₂ atmosphere to form a lithium transition metal oxide.

Thereafter, to break the agglomeration of the lithium transition metal oxide and adjust the active material particle size, a pulverization process was carried out using a jet-mill to form a lithium transition metal oxide in the form of a single particle. The pulverization was performed under conditions of a pulverizing pressure of 1.5 bar and a rotational speed of 3,300 rpm.

Subsequently, 0.172g of LiOH·H₂O, 0.533g of Co₃O₄, and 0.162g of Al(OH)₃ were mixed with 40g of the obtained lithium transition metal oxide, followed by heat treatment at 650-700°C for 5 hours.

Finally, a single particle positive electrode active material was manufactured, where the surface of the LiNi_{0.88}Co_{0.04}Mn_{0.08}Zr_{0.002} lithium transition metal oxide was coated with 1 mol% Li, 5 mol% Co, and 0.5 mol% Al.

### (2) Manufacturing of Lithium Secondary Battery

A coin half-cell lithium secondary battery was manufactured using the positive electrode active material prepared by the above method.

The slurry for manufacturing an electrode plate consisted of positive electrode active material: conductive material (acetylene black): binder (PVDF, KF1120) = 96.5:1.5:2 wt%, and additional NMP (N-Methyl-2-pyrrolidone) was added for solid content and slurry viscosity. The prepared slurry was coated onto Al foil using a doctor blade, dried, and then rolled to produce an electrode plate. At this time, the electrode loading amount was 15-16 mg/cm², and the composite density of the electrode was 3.5 g/cm³ or more.

The electrolyte used in the coin cell was 1M LiPF₆ in EC:DMC:EMC = 3:4:3 (vol%) + 3.0 wt% VC, and a PP separator and lithium anode (300 µm) were used to fabricate the coin half-cell.

### Comparative Example 1: Bottom-up Method for Manufacturing Positive Electrode Active Material

A positive electrode active material and lithium secondary battery were manufactured in the same manner as in Example 1, except that an active material precursor with a composition of (Ni_{0.88}Co_{0.04}Mn_{0.08})(OH)₂ having an average particle diameter D50 of 3.5 µm was used, and the pulverization was performed under conditions of a pulverizing pressure of 1.3 bar and a rotational speed of 3,300 rpm.

Below, Table 1 summarizes the process conditions and properties of the positive electrode active material according to the subsequent Experimental Examples 1 and 2.

**(Table 1)**

| | Particle Morphology | Average Particle Size of Precursor (D50, µm) | Average Particle Size of Active Material (D50, µm) | pulverizing Pressure (bar) | Maximum Pole Density Value of (001) Plane |
|---|---|---|---|---|---|
| Example 1 | Single particle | 15 | 3.00 | 1.5 | 14.348 |
| Comparative Example 1 | Single particle | 3.5 | 3.56 | 1.3 | 29.022 |

### Experimental Example 1: EBSD Analysis of Positive Electrode Active Material

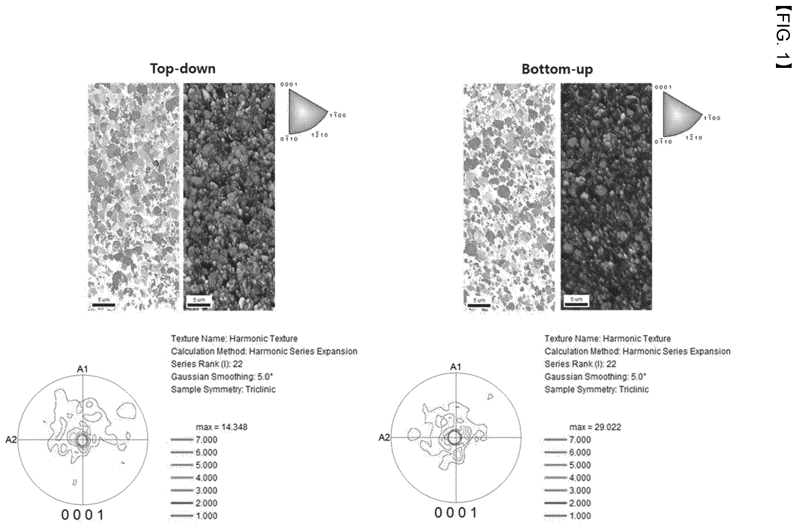

The EBSD images (upper part of FIG. 1) and pole figure diagrams (lower part of FIG. 1) obtained through EBSD analysis for the (001) plane of the positive electrode active materials prepared according to Example 1 and Comparative Example 1 were used to analyze the maximum pole density value properties of the (001) plane. The results are shown in FIG. 1 and Table 1. The specific measurement method is as follows.

Measurements were performed using Hitachi's SU5000 as the FESEM image observation device and EDAX's Velocity Super as the EBSD data analysis device under conditions of an area of 20 x 50 µm with a step size of 50 nm.

Referring to the EBSD images in FIG. 1, it was confirmed that the positive electrode active material according to Example 1 did not exhibit preferential orientation along the (001) plane due to the suppression of growth on the (001) plane. In contrast, the positive electrode active material according to Comparative Example 1 exhibited excessive growth on the (001) plane, leading to preferential orientation along the (001) plane.

Furthermore, referring to the pole figure diagrams in FIG. 1, it was confirmed that the maximum pole density value of the positive electrode active material according to Example 1 was 14.348, whereas the maximum pole density value of the positive electrode active material according to Comparative Example 1 was 29.022.

### Experimental Example 2: Evaluation of Shape and Average Particle Diameter D50 of Positive Electrode Active Material

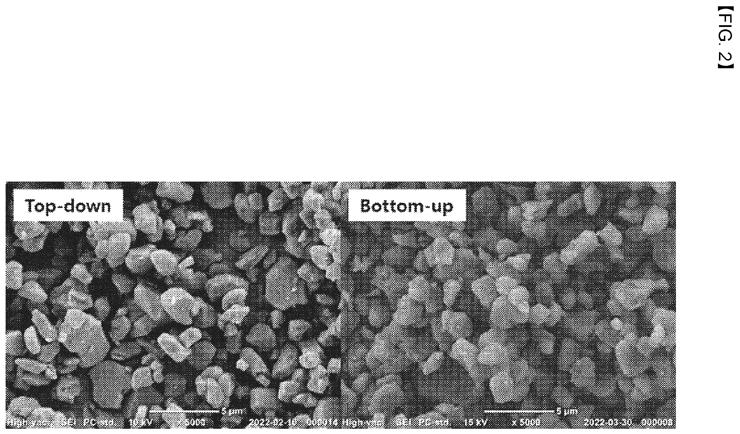

The shape of the positive electrode active materials prepared according to Example 1 and Comparative Example 1 was observed through a scanning electron microscope (SEM), and the results are shown in FIG. 2.

Referring to FIG. 2, it was confirmed that both the positive electrode active materials according to Example 1 and Comparative Example 1 had a single particle form composed of unaggregated primary particles.

Additionally, it was confirmed that the average particle diameter D50 of the positive electrode active material according to Example 1 was approximately 3.00 µm, and the average particle diameter D50 of the positive electrode active material according to Comparative Example 1 was approximately 3.56 µm.

### Experimental Example 3: Evaluation of Electrochemical Characteristics of Lithium Secondary Battery

Electrochemical characteristic evaluation experiments were conducted for the lithium secondary batteries prepared according to Example 1 and Comparative Example 1. The specific experimental method is as follows.

### (1) Evaluation of Initial Capacity and Initial Efficiency

After manufacturing the lithium secondary battery, it was aged at room temperature for 10 hours, followed by charge and discharge tests. For the evaluation of initial capacity, a reference capacity of 200 mAh/g was used, and the battery was charged at a constant current of 0.1C to 4.25V, then switched to constant voltage charging until the termination current reached 0.05C.

After charging, a rest time of 20 minutes was allowed, followed by discharging at a constant current of 0.1C to 3.0V using a reference capacity of 200 mAh/g.

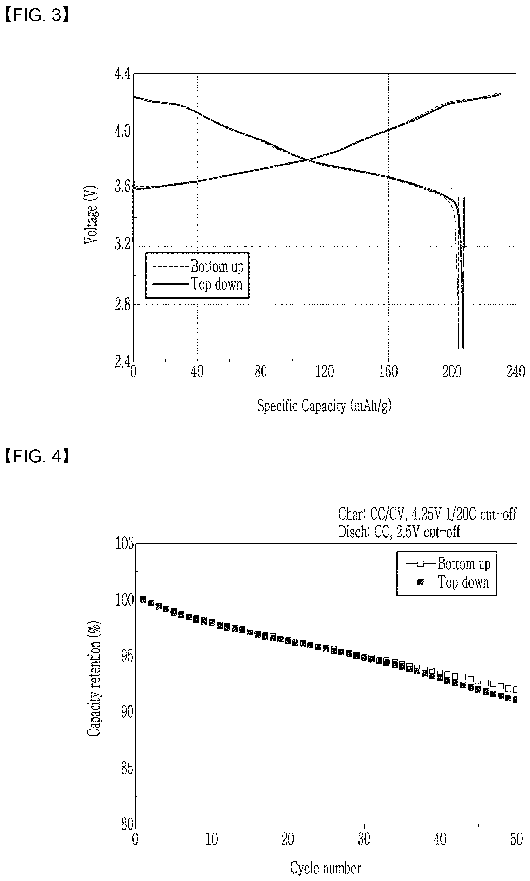

The results are shown in FIG. 3 and Table 1 below.

### (2) Evaluation of High-Temperature Life Characteristics

High-temperature life characteristics were evaluated by performing 100 charge and discharge cycles at 45°C under conditions of 0.5C charge and 1.0C discharge. The capacity retention rate and resistance increase rate of the 100th cycle compared to the first cycle were measured, and the results are shown in FIG. 4 and Table 2 below.

**(Table 2)**

| | Charge Capacity (mAh/g) | Discharge Capacity (mAh/g) | Initial Efficiency (%) | High-Temperature Cycle Retention (%) | High-Temperature Resistance Increase Rate (%) |
|---|---|---|---|---|---|
| Example 1 | 229.0 | 206.6 | 90.2 | 91.5 | 169 |
| Comparative Example 1 | 227.6 | 203.8 | 89.5 | 91.0 | 170 |

Referring to FIG. 3 and Table 2, it was confirmed that the lithium secondary battery according to Example 1 exhibited superior initial charge capacity, discharge capacity, and initial efficiency compared to the lithium secondary battery according to Comparative Example 1. Additionally, referring to FIG. 4 and Table 2, it was confirmed that the lithium secondary battery according to Example 1 had a higher high-temperature lifespan retention rate and a lower high-temperature resistance increase rate compared to the lithium secondary battery according to Comparative Example 1, indicating excellent high-temperature lifespan characteristics. This can be interpreted as a result of the positive electrode active material according to Example 1 being in the form of a single particle, and as the (001) plane decreases, the capacity, initial efficiency, and high-temperature lifespan characteristics of the battery are improved.

Although the preferred embodiments of the present invention have been described above, the present invention is not limited thereto, and various modifications can be made within the scope of the claims, the detailed description of the invention, and the accompanying drawings, and these also fall within the scope of the present invention.

Therefore, the substantial scope of rights of the present invention will be defined by the appended claims and their equivalents.

## Claims

1. A positive electrode active material for a lithium secondary battery, wherein,
the positive active material is a lithium transition metal oxide comprising nickel (Ni),
wherein the lithium transition metal oxide is in form of a single particle, has an average particle diameter D50 of 2 to 4 µm, and a maximum pole density value of 20 or less at the (001) plane in a pole figure diagram obtained through Electron Back Scatter Diffraction (EBSD) analysis.

2. The positive electrode active material of claim 1, wherein:
the positive electrode active material does not exhibit preferential orientation along the (001) plane during EBSD image analysis.

3. The positive electrode active material of claim 1, wherein:
the positive electrode active material is derived from a positive electrode active material precursor having an average particle diameter D50 of 5 to 15 µm.

4. The positive electrode active material of claim 1, wherein:
the lithium transition metal oxide is represented by the following Chemical Formula 1:
[Chemical Formula 1] Liₐ(Ni_{b}Me_{1-b})O₂
in Chemical Formula 1, 0.8≤a≤1.2, 0.6≤b≤0.99, and Me is Co, Mn, Al, Zr, Nb, B, P, La, Mg, Ta, Ti, W, Mo, Si, Ga, Zn, Ag, Sn, Bi, Au, Y, Ge, V, Cr, Fe, or a combination thereof.

5. The positive electrode active material of claim 4, wherein:
it is 0.8≤b≤0.99.

6. The positive electrode active material of claim 1, wherein:
the positive electrode active material further comprises a coating layer positioned on the surface of the lithium transition metal oxide, and the coating layer includes Co, Al, Ti, W, B, F, P, Mg, Ni, Fe, Cr, V, Cu, Ca, Zn, Zr, Nb, Mo, Sr, Sb, Bi, Si, S, La, Ta, Ga, or a combination thereof.

7. A method for manufacturing a positive electrode active material for a lithium secondary battery, comprising:
forming a mixture comprising a positive electrode active material precursor containing nickel (Ni) and a lithium raw material;
sintering the mixture to form a lithium transition metal oxide; and
pulverizing a lithium transition metal oxide to form a lithium transition metal oxide in the form of a single particle,
wherein the average particle diameter D50 of the positive electrode active material precursor is larger than the average particle diameter D50 of the positive electrode active material.

8. The method of claim 7, wherein:
the pulverizing is performed such that the (001) plane of the lithium transition metal oxide is pulverized.

9. The method of claim 7, wherein:
the pulverizing is performed at a rotational speed of 3,000 to 3,600 rpm.

10. The method of claim 8, wherein:
the pulverizing is performed at a pulverizing pressure of 1.4 bar or more.

11. The method of claim 7, wherein:
the average particle diameter D50 of the positive electrode active material precursor is 5 to 15 µm.

12. The method of claim 7, wherein:
the average particle diameter D50 of the positive electrode active material is 2 to 4 µm.

13. The method of claim 7, wherein:
the sintering is performed at a temperature of 830 to 870°C for 5 to 15 hours.

14. The method of claim 7, wherein:
in forming the mixture, a doping raw material is further mixed, and the doping raw material is a compound including one or more of Zr, Nb, Al, B, P, La, Mg, Ta, Ti, W, Mo, Si, Ga, Zn, Ag, Sn, Bi, Au, Y, Ge, V, Cr, and Fe, or a combination thereof.

15. The method of claim 7, wherein:
after forming the lithium transition metal oxide in the form of a single particle, the method further comprises:
mixing the lithium transition metal oxide in form of a single particles with a coating raw material; and
performing heat treatment to form a coating layer,
wherein, the coating raw material is a compound including one or more of Co, Al, Ti, W, B, F, P, Mg, Ni, Fe, Cr, V, Cu, Ca, Zn, Zr, Nb, Mo, Sr, Sb, Bi, Si, S, La, Ta, and Ga, or a combination thereof.

16. A positive electrode comprising the positive electrode active material according to any one of claims 1 to 6.

17. A lithium secondary battery comprising the positive electrode according to claim 16.
